# DEMANDE DE BREVET EUROPEEN

(11) **EP 1 161 099 A1**
(43) Date de publication de la demande: **05.12.2001**
(21) Numéro de dépôt: 01401227.2
(22) Date de dépôt: 14.05.2001
(51) Int. Cl.: H04N 7/26

(54) **Codage d'image par segments avec prédiction du mouvement**

(30) Priorité: 30.05.2000 FR 0006954
(71) Demandeur: ALCATEL, 75008 Paris (FR)
(72) Inventeur: Assaf, Nadine, c/o Semaan, 75015 Paris (FR)
(74) Mandataire: Lamoureux, Bernard

(57) **Abrégé**

L'invention concerne un procédé de codage d'image pour une transmission sur un canal à bas débit et à haut taux d'erreur, typiquement un canal avec un débit inférieur à 100 kbit/s et un taux d'erreur supérieur à 10⁻⁶, voire 10⁻⁴. L'image est séparée en une pluralité de segments composés de macro-blocs et le procédé met en oeuvre un codage par estimation de mouvement. Selon l'invention, au moins pour un macro-bloc de bord d'un segment, un vecteur d'estimation de mouvement peut s'étendre dans un segment voisin. Ceci est particulièrement avantageux pour les macro-blocs situés en haut et à droite du segment dans le cas où le balayage pour l'estimation des vecteurs de mouvement s'effectue de gauche à droite et haut en bas.

Cette solution permet d'éviter les erreurs provoquées par une estimation des vecteurs de mouvement à l'intérieur des segments, tout en limitant la propagation des erreurs de codage qu'apporte une séparation de l'image en segments.

## Description

La présente invention concerne le codage, et plus précisément le codage vidéo de source pour une transmission sans fil.

La transmission sans fil est caractérisée par un débit de transmission relativement faible, et par un taux d'erreur important. Pour le débit de transmission, on qualifie de faible débit des valeurs de débit inférieures à 100 kbit/s, comme par exemple les canaux GSM à 14 kbit/s. On qualifie d'important des taux d'erreur supérieurs à 10⁻⁶, voire supérieurs à 10⁻⁴.

La norme ITU-T H 263+ propose des solutions pour le codage de source vidéo. Cette norme est constituée d'une partie commune obligatoire et d'un ensemble d'annexes facultatives, qui peuvent être implémentées en sus de la partie commune de la norme. La norme ne fournit pas d'indication de la qualité des images obtenues, ni de la combinaison d'annexes à appliquer dans des circonstances données, notamment pour des transmissions sans fil. L'implémentation de l'ensemble de ces annexes conduit à un système difficilement applicable à des transmissions sans fil, du fait du faible débit de transmission disponible et du taux d'erreurs.

La partie commune de la norme H.263+ propose de procéder à un codage par blocs, avec prédiction. On distingue dans une séquence d'images des images envoyées intégralement - images de type "I" -, des images qui ne sont pas transmises intégralement mais prédites à partir d'une image précédente - images de type "P" - et des images qui ne sont pas transmises intégralement mais prédites à partir d'une image précédente et d'une image suivante. Le codage utilise les étapes suivantes, pour une image dans laquelle sont définis des blocs ou des macro-blocs composés d'une pluralité de blocs, typiquement de 6 blocs dont 4 blocs de luminance et 2 blocs de chrominance :
- estimation de mouvement des blocs ou des macro-blocs de chaque image;
- prédiction avec compensation de mouvement, par rapport à une image de référence;
- codage pour la transmission, typiquement par codage avec compression (comprenant la DCT ("Discrete Cosine Transform" transformée de cosinus numérique), la quantification, et le codage VLC ("Variable Length Coding", codage à longueur variable)).

Le décodage utilise des étapes inverses pour reconstituer chaque image.

Dans cette norme, l'annexe R - Independent Segment decoding mode ou mode de décodage indépendant par segments - propose d'utiliser pour le traitement d'estimation de mouvement des segments d'image vidéo ("video picture segments"), qui sont constitués d'un ensemble de blocs; l'estimation de mouvement s'effectue indépendamment dans chaque segment. Dans ce cas, les limites d'un segment sont traitées comme des limites de l'image pour le décodage, y compris pour le traitement des vecteurs de mouvement qui traversent ces limites. De tels vecteurs de mouvement traversant les limites sont interdits en l'absence des modes optionnels des annexes D, F, J ou O. Si l'on utilise le mode sans restriction des vecteurs de mouvement ("Unrestricted motion vector mode") de l'annexe D, les frontières du segment d'image vidéo courant sont extrapolés pour constituer des prédictions des pixels en dehors des régions de segment.

L'annexe D de la norme propose une exception au principe posé dans la partie commune de la norme, à savoir que les vecteurs de mouvement sont restreints, de sorte que tous les pixels qu'ils référencent se trouvent dans la zone codée de l'image. Plus spécifiquement, cette annexe intitulée "Unrestricted Motion Vector Mode" (mode de vecteur de mouvement non-restreint) propose que les vecteurs de mouvement soient autorisés à pointer en dehors de l'image. Lorsqu'un pixel référencé par un vecteur de mouvement est en dehors de la surface d'image codée, on utilise à sa place un pixel de bord. La valeur du pixel de bord est obtenue en limitant le vecteur de mouvement à la dernière position correspondant à un pixel entier à l'intérieur de la surface d'image codée. La limitation du vecteur de mouvement s'effectue sur la base d'un pixel, et est mise en oeuvre séparément pour chaque composante du vecteur de mouvement.

D'autres annexes proposent que les vecteurs de mouvement puissent traverser les frontières d'une image ou du segment d'une image. C'est le cas des annexes F ("Advanced Prediction Mode", ou mode de prédication avancée), J ("Deblocking filter mode" ou filtre de diminution ou de suppression des artefacts de blocs), O ("Temporal, SNR and Spatial Scalability", échelle temporelle, de rapport signal sur bruit ou spatiale).

L'invention propose une solution au problème des transmissions à bas débits et à haut taux d'erreur. Dans ce contexte particulier se pose le problème des effets d'un codage par blocs, et d'une limitation des vecteurs de mouvement. Ce problème se pose de façon spécifique et aiguë dans le cas de transmissions à bas débits et à haut taux d'erreurs, dans la mesure où les erreurs qui apparaissent peuvent difficilement être corrigées par retransmission ou code correcteur, du fait du délai que ceci engendrerait. Par ailleurs, le bas débit ne peut être compensé par un nombre d'erreurs plus faible.

Ce problème se pose de façon particulière pour les macro-blocs qui se trouvent sur la droite et au bord supérieur d'un segment; ceci résulte de la mise en oeuvre du codage prédictif, et plus spécifiquement du sens de balayage des macro-blocs : il est en effet courant de balayer l'image de gauche à droite et de haut en bas pour la détermination des vecteurs de mouvement.

Par ailleurs, un des effets du codage par segments proposé dans l'annexe R est de limiter l'influence des erreurs de transmission. De ce point de vue, l'annexe R s'applique tout particulièrement de façon stricte dans le cas d'une transmission à bas débit, et il est contraire aux suggestions qui sont faites dans l'annexe R d'envisager dans le cas d'une telle transmission à bas débit que les vecteurs de mouvement puissent sortir du cadre du segment.

L'invention propose donc un procédé de codage d'image pour une transmission sur un canal à bas débit et à haut taux d'erreur, dans lequel l'image est séparée en une pluralité de segments composés de macro-blocs et dans lequel est mis en oeuvre un codage par estimation de mouvement, caractérisé en ce qu'au moins pour un macro-bloc de bord d'un segment, un vecteur d'estimation de mouvement peut s'étendre dans un segment voisin.

Dans un mode de réalisation, pour un macro-bloc de bord d'un segment, un vecteur d'estimation de mouvement peut s'étendre dans un macro-bloc voisin du segment voisin.

De préférence, le balayage de l'image pour l'estimation des vecteurs de mouvement s'effectue de gauche à droite et de haut en bas, et un vecteur d'estimation de mouvement peut s'étendre dans un segment voisin pour les macro-blocs adjacents au bord supérieur d'un segment.

II est aussi avantageux, si le balayage de l'image pour l'estimation des vecteurs de mouvement s'effectue de gauche à droite et de haut en bas, qu'un vecteur d'estimation de mouvement puisse s'étendre dans un segment voisin pour les macro-blocs adjacents au bord droit d'un segment.

Dans un mode de réalisation, chaque segment est composé de deux lignes de macro-blocs.

L'invention s'applique tout particulièrement lorsque le taux d'erreur est supérieur à 10⁻⁶, voire supérieur à 10⁻⁴, ou lorsque la vitesse de transmission est inférieure à 100 kbit/s.

L'invention propose encore un codeur mettant en oeuvre un tel procédé de codage. Elle propose aussi un système de transmission sur un canal à bas débit et à haut taux d'erreur, comprenant un tel codeur.

D'autres caractéristiques et avantages de l'invention apparaîtront à la lecture de la description qui suit de modes de réalisation de l'invention, donnés à titre d'exemple et en référence aux dessins annexés, qui montrent :
- figure 1, une représentation schématique d'une définition possible de segments d'image vidéo dans une image;
- figure 2, une représentation schématique d'un codeur selon l'invention.

L'invention s'applique aux systèmes de transmission à codage par vecteurs de mouvement; elle est d'un intérêt tout particulier dans le cas précis des systèmes de transmission à bas débit et à haut taux d'erreur - ces termes étant définis plus haut. Dans le cas où sont définis des segments d'image pour l'estimation des vecteurs de mouvement, l'invention propose d'accepter, pour les blocs ou macro-blocs définissant le bord de l'image, que les vecteurs de mouvement débordent sur les segments voisins.

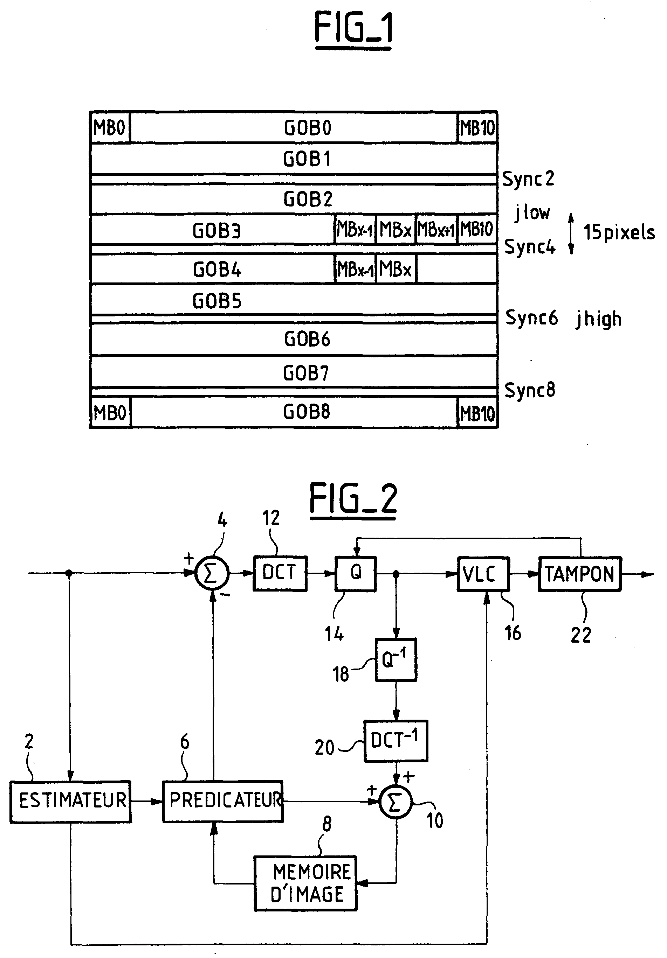

La figure 1 montre une représentation schématique d'une définition possible de segments d'image vidéo dans une image. Dans l'exemple, l'image est une image QCIF et chaque segment est constitué de deux lignes de macro-blocs, limitées par une synchronisation. Chaque macro-bloc est constitué de 4 blocs de luminance et de 2 blocs de chrominance, chaque bloc étant lui-même formé d'un carré de 8 pixels sur 8 pixels. Les synchronisations sont utilisées non seulement pour séparer les segments, mais permettent aussi au décodeur de retrouver la synchronisation dans le cas d'une erreur de transmission sur l'un des segments. La séparation en segments évite la propagation sur toute l'image des erreurs de transmission.

Dans l'exemple, chaque segment est constitué de deux lignes de macro-blocs, MBi, qui sont notées GOBi, ce sigle étant l'acronyme de "groupe de blocs" dans la langue anglaise. Chaque ligne est composée de onze macro-blocs, et l'image est découpée en 9 groupes de blocs, c'est-à-dire en 4 segments et demi pour une image de 176 par 144 pixels de luminance. Comme le montre la figure, chaque segment est séparé des segments adjacents par une synchronisation.

Selon l'annexe R de la norme H263+, qui fait l'objet d'une discussion plus haut, l'estimation des vecteurs de mouvement s'effectue à l'intérieur des segments. Cette solution présente l'avantage de limiter les erreurs de propagation, chaque segment étant codé de façon indépendante des segments voisins. Cette solution est satisfaisante, mais trouve ses limites dans les transmissions à bat débit et à haut taux d'erreurs.

L'invention propose de relâcher cette contrainte, pour l'estimation des vecteurs de mouvement des macro-blocs de bord d'un segment. Plus spécifiquement, dans le cas où l'estimation des vecteurs de mouvement s'effectue par balayage de l'image de gauche à droite et de haut en bas, le problème d'estimation de mouvement se pose pour les macro-blocs qui forment le bord supérieur et le bord droit de chaque segment. En effet, pour l'estimation du mouvement on utilise alors des pixels qui se trouvent à gauche, en haut, et en haut à droite du pixel courant; l'estimation à l'intérieur du segment s'effectue de façon correcte pour les macro-blocs situés sur la gauche du segment ou sur le bord inférieur du segment (pour les segments de plus de deux lignes de macro-blocs). Toutefois, pour les macro-blocs situés sur le bord supérieur du segment ou sur le bord droit du segment, la limitation du vecteur de mouvement pose problème. L'invention propose qu'il puisse présenter une extrémité dans un des macro-blocs adjacents du segment adjacent.

Dans l'exemple de la figure, on considère le segment qui est formé des lignes de blocs GOB4 et GOB5. Ce segment est limité à sa partie supérieure par une synchronisation notée Sync4 sur la figure, et à sa partie inférieure par une synchronisation notée Sync5 sur la figure. On considère le macro-bloc MBx de la ligne de macro-blocs GOB4. Ce macro-bloc est un des macro-blocs de bord du segment. L'invention propose donc, pour l'estimation des vecteurs de mouvement des pixels ou des blocs de ce macro-bloc, d'utiliser non seulement les autres macro-blocs du segment mais aussi le cas échéant des macro-blocs du segment formé des lignes de macro-blocs GOB2 et GOB3. Plus spécifiquement, il est avantdgeux d'utiliser uniquement des macro-blocs adjacents, autrement dit les macro-blocs de la ligne GOB3, ou plus spécifiquement les macro-blocs MBx-1, MBx et MBx+1 de la ligne GOB3.

La figure 1 montre la ligne jlow, qui sépare les lignes de macro-blocs GOB2 et GOB3, et jhigh qui sépare les lignes de macro-blocs GOB5 et GOB6. Dans ce cas, pour l'estimation de mouvement d'un macro-bloc du bord supérieur du segment, c'est-à-dire pour un macro-bloc de la ligne GOB4, on peut utiliser les macro-blocs entre les lignes jlow et jhigh. La distance entre la ligne jlow et la synchronisation Sync4 est de 15 pixels.

L'invention s'applique tout particulièrement aux macro-blocs qui sont situés sur la droite d'un segment, toujours dans le cas d'un balayage de l'image de gauche à droite et de haut en bas. Dans ce cas, si l'on ne permettait pas au vecteur de mouvement de traverser le bord supérieur du segment, il aurait tendance à s'étendre horizontalement, ce qui aurait pour effet de provoquer une sortie de l'image. L'invention permet d'éviter ce problème. Il est donc tout particulièrement avantageux d'appliquer l'invention au macro-bloc situé en haut et à droite du segment, dans l'exemple de la figure 1 le macro-bloc MB10 de la ligne de bloc GOB4 pour le segment constitué des lignes GOB4 et GOB5.

L'invention permet d'éviter, pour les transmissions à bas débit et à haut taux d'erreur, les erreurs provoquées par la limitation de l'estimation de mouvement à un segment. Elle améliore la qualité de l'image reconstruite, et n'interfère pas sur les contraintes rencontrées dans une transmission à bas débit et à haut taux d'erreur, à savoir la vitesse de transmission, la complexité et les capacités mémoire du codeur ou du décodeur. Dans la mesure où l'estimation des vecteurs de mouvement est néanmoins limitée, l'invention présente les avantages de l'annexe R, c'est-à-dire qu'elle permet de limiter la propagation des erreurs.

Dans la description qui précède, on n'a pas précisé quelle était l'image de référence; celle-ci peut être choisie de façon connue en soi, et peut notamment simplement être l'image précédente, comme dans l'exemple du codeur de la figure 2.

La figure 2 montre une représentation schématique d'un codeur mettant en oeuvre l'invention. Les images vidéo sont appliquées en entrée du système de codage d'une part à un estimateur de mouvement 2 et d'autre part à une entrée d'un soustracteur 4.L'estimateur de mouvement fournit une estimation de mouvement des blocs de l'image par rapport à l'image précédente, ou des macro-blocs de cette image; comme proposé dans la norme, on peut utiliser des blocs de 8 x 8 pixels, et des macro-blocs composés de 6 blocs dont 4 blocs de luminance et 2 blocs de chrominance.

Selon l'invention, l'estimateur de mouvement utilise comme proposé dans l'annexe R des segments de l'image. Les vecteurs de mouvement sont alors estimés à l'intérieur du segment. Toutefois, comme expliqué plus haut, au moins pour les blocs de bords, l'estimateur utilise des vecteurs de mouvement qui peuvent sortir du segment.

Les vecteurs de mouvement des blocs sont transmis à un prédicteur avec compensation de mouvement 6. Celui-ci reçoit aussi en entrée une image de base pour l'estimation, qui provient d'une mémoire d'image de référence 8. La prédiction avec compensation du mouvement s'effectue par rapport à l'image de référence.

A partir de l'image de référence et des vecteurs de mouvement, le prédicteur avec compensation de mouvement fournit une image estimée, qui est appliquée d'une part à une entrée de soustraction du soustracteur 4 et d'autre part à une entrée d'un additionneur 10.

De la sorte, le soustracteur 4 reçoit l'image vidéo d'entrée, et une image estimée à partir d'une image de référence contenue dans la mémoire d'images de base. La soustraction de l'image estimée à l'image vidéo appliquée en entrée est appliquée à un codeur avec compression 12, typiquement un codeur par transformation par cosinus numérique. On procède ensuite à une quantification en 14, de préférence avec un pas de quantification variable. La sortie du quantificateur 14 est appliquée d'une part à un codeur à longueur variable 16 et d'autre part à un inverseur de quantification 18, qui applique une opération inverse. En sortie de l'inverseur de quantification 18, on applique en 20 l'inverse de la transformation du codeur 12. En sortie de l'inverseur de codage 20, on retrouve la différence entre l'image d'entrée et l'image estimée, telle qu'elle pourrait être reconstituée après réception dans un système de décodage associé, en l'absence d'erreurs de transmission. Cette différence est appliquée à une entrée de l'additionneur 10. De la sorte l'additionneur 10 fournit en sortie vers la mémoire d'image de référence une image qui peut être obtenue après réception dans le système de décodage - le cas échéant après perturbation par les erreurs de transmission.

Le codeur à longueur variable reçoit la sortie du codeur 14, et en outre la sortie de l'estimateur de mouvement 2, autrement dit la différence entre l'image d'entrée et l'image estimée et les vecteurs de mouvement. La sortie du codeur VLC est appliquée à un tampon vidéo 22 avant transmission sur le canal; bien entendu, avant la transmission, on peut multiplexer le signal vidéo avec des signaux audio ou autres, ce qui est connu en soi et sans incidence sur le fonctionnement de l'invention. Pour un pas de quantification variable, la quantité d'information dans le tampon permet de commander le pas de quantification, comme représenté sur la figure 3 par la flèche reliant le tampon 22 et le quantificateur 14.

Par rapport à un codeur de l'état de la technique, le codeur de l'invention diffère en ce que l'estimateur de mouvement considère aussi des macro-blocs en dehors du segment courant, et par exemple, considère des macro-blocs dans les lignes de macro-blocs adjacentes. On notera que le décodeur apte à décoder les signaux fournis par le codeur ne diffère pas d'un décodeur de l'état de la technique.

Bien entendu, la présente invention n'est pas limitée aux exemples et modes de réalisation décrits et représentés, mais elle est susceptible de nombreuses variantes accessibles à l'homme de l'art. II est clair que la définition des macro-blocs ou des segments donnée plus haut n'est qu'un exemple, et que l'invention s'applique aussi pour d'autres définitions des segments dans l'image, ou pour d'autres définitions des blocs et des macro-blocs. On pourrait ainsi adopter une découpe de l'image en segments verticaux, dans ce cas, le sens de balayage pourrait changer, tout comme les macro-blocs auxquels s'appliquerait l'invention.

## Revendications

1. Un procédé de codage d'image pour une transmission sur un canal à bas débit et à haut taux d'erreur, dans lequel l'image est séparée en une pluralité de segments composés de macro-blocs et dans lequel est mis en oeuvre un codage par estimation de mouvement, **caractérisé en ce qu'**au moins pour un macro-bloc de bord d'un segment, un vecteur d'estimation de mouvement peut s'étendre dans un segment voisin.

2. Le procédé de la revendication 1, **caractérisé en ce que** pour un macro-bloc de bord d'un segment, un vecteur d'estimation de mouvement peut s'étendre dans un macro-bloc voisin du segment voisin.

3. Le procédé de la revendication 1 ou 2, **caractérisé en ce que** le balayage de l'image pour l'estimation des vecteurs de mouvement s'effectue de gauche à droite et de haut en bas, et **en ce qu'**un vecteur d'estimation de mouvement peut s'étendre dans un segment voisin pour les macro-blocs adjacents au bord supérieur d'un segment.

4. Le procédé de la revendication 1, 2 ou 3, **caractérisé en ce que** le balayage de l'image pour l'estimation des vecteurs de mouvement s'effectue de gauche à droite et de haut en bas, et **en ce qu'**un vecteur d'estimation de mouvement peut s'étendre dans un segment voisin pour les macro-blocs adjacents au bord droit d'un segment.

5. Le procédé de l'une des revendications 1 à 4, **caractérisé en ce que** chaque segment est composé de deux lignes de macro-blocs.

6. Le procédé de l'une des revendications 1 à 5, **caractérisé en ce que** le taux d'erreur est supérieur à 10⁻⁶, voire supérieur à 10⁻⁴.

7. Le procédé de l'une des revendications 1 à 6, **caractérisé en ce que** la vitesse de transmission est inférieure à 100 kbit/s.

8. Un codeur mettant en oeuvre le procédé de l'une des revendications 1 à 7.

9. Un système de transmission sur un canal à bas débit et à haut taux d'erreur, comprenant un codeur selon la revendication 8.
